(19) Europäisches Patentamt / European Patent Office / Office européen des brevets

(11) **EP 2 311 143 B1**

(12) **EUROPEAN PATENT SPECIFICATION**

(45) Date of publication and mention
of the grant of the patent:
**22.04.2015 Bulletin 2015/17**

(51) Int Cl.:
*H01Q 13/10* $^{(2006.01)}$          *H01Q 21/06* $^{(2006.01)}$
*H01Q 21/26* $^{(2006.01)}$          *H01Q 1/22* $^{(2006.01)}$
*H04B 7/04* $^{(2006.01)}$

(21) Application number: **09774252.2**

(22) Date of filing: **29.06.2009**

(86) International application number:
**PCT/US2009/049081**

(87) International publication number:
**WO 2010/002801 (07.01.2010 Gazette 2010/01)**

(54) **ANTENNA ARRAY CONFIGURATIONS FOR HIGH THROUGHPUT MIMO WLAN SYSTEMS**

ANTENNENARRAYKONFIGURATIONEN FÜR MIMO-WLAN-SYSTEME MIT HOHEM DURCHSATZ

CONFIGURATIONS DE RÉSEAU D'ANTENNES POUR DES SYSTÈMES DE RÉSEAU LOCAL SANS FIL À ENTRÉES MULTIPLES SORTIES MULTIPLES HAUT DÉBIT

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **30.06.2008 US 165641**

(43) Date of publication of application:
**20.04.2011 Bulletin 2011/16**

(73) Proprietor: **QUALCOMM Incorporated**
**San Diego, California 92121-1714 (US)**

(72) Inventors:
• **INANOGLU, Hakan**
  **San Diego**
  **CA 92121-1714 (US)**
• **KETCHUM, John, W.**
  **San Diego**
  **CA 92121-1714 (US)**
• **METREAUD, Leon**
  **San Diego**
  **CA 92121-1714 (US)**
• **WALLACE, Mark, S.**
  **San Diego**
  **CA 92121-1714 (US)**

(74) Representative: **Catesby, Olivia Joanne et al**
  **Tomkins & Co.**
  **5 Dartmouth Road**
  **Dublin 6 (IE)**

(56) References cited:
WO-A-95/23441          WO-A-2008/136715
GB-A- 2 415 863        US-A- 5 489 913
US-A1- 2002 085 643    US-A1- 2008 129 634
US-B1- 6 784 845

• LEE T-I ET AL: "Compact polarisation and spatial multiplexing antenna for MIMO applications" ELECTRONICS LETTERS, IEE STEVENAGE, GB, vol. 42, no. 15, 20 July 2006 (2006-07-20), pages 839-840, XP006026946 ISSN: 0013-5194

**Description**

TECHNICAL FIELD

The present disclosure relates generally to antennas for use in multiple-input multiple-output (MIMO) communication systems and, more particularly, to antenna array configurations to achieve high data throughput and high spectral efficiency (capacity).

BACKGROUND

A multiple-input multiple-output (MIMO) communication system employs multiple ($N_T$) transmit antennas and multiple ($N_R$) receive antennas for data transmission. A MIMO channel formed by the $N_T$ transmit and $N_R$ receive antennas may be decomposed into $N_S$ independent channels, with $N_S \leq \min \{N_T, N_R\}$. Each of the $N_S$ independent channels is also referred to as a spatial subchannel of the MIMO channel and corresponds to a dimension. The MIMO system can provide improved performance (e.g., increased transmission capacity) over that of a single-input single-output (SISO) communication system if the additional dimensionalities created by the multiple transmit and receive antennas are utilized.
To provide wireless connectivity between a portable processing devices (e.g., laptop computer) and other computers (laptops, servers, etc.), peripherals (e.g., printers, mouse, keyboard, etc.) or communication devices (modems, cellular phones, smart phones, etc.) it is necessary to equip the portable device with an antenna or multiple antennas. For example, multiple antennas may be located either external to the device or integrated (embedded) within the device (e.g., embedded in the display unit).
Although an embedded antenna design can overcome disadvantages associated with external antenna designs (e.g., less susceptible to damage), embedded antenna designs typically do not perform as well as external antennas. To improve the performance of an embedded antenna, the antenna is preferably disposed at a certain distance from any metal component of the device. For example, depending on the device design and utilized antenna type, the distance between the antenna and any metal component should be at least approximately 10 millimeters (or approximately 0.3937 inches). Another disadvantage associated with embedded antenna designs is that the size of the device must be increased to accommodate antenna placement, especially when two or more antennas are used. US2002/085643 A1 discloses the use of closely spaced antenna elements to provide a compact MIMO antenna unit. US 5 489 913 A discloses a miniaturized radio antenna element for use at VHF and UHF.

SUMMARY

The present disclosure as described herein, with reference to the claims, provides techniques for configuring multi-element antenna arrays. Such antenna arrays may be designed with slot pairs separated by $\lambda/2$ along perpendicular axes (e.g., x and y-directions). Another such array may have four or more co-located antenna element pairs formed with some cross slots having the same rotational orientation and other cross slots having a different rotational orientation.

BRIEF DESCRIPTION OF THE DRAWINGS

So that the manner in which the above recited features of the present disclosure may be understood in detail, a more particular description, briefly summarized above, may be had by reference to embodiments, some of which are illustrated in the appended drawings. It is to be noted, however, that the appended drawings illustrate only certain typical embodiments of this disclosure and are therefore not to be considered limiting of its scope, for the description may admit to other equally effective embodiments.

FIG. 1 shows an example MIMO wireless communication system;

FIG. 2 illustrates an example configuration of 8 dual polarized slot radiated antennas in accordance with certain embodiments of the present disclosure;

FIG. 3 illustrates an example 16-element dual polarized slot radiated antennas in accordance with certain embodiments of the present disclosure;

FIG. 4 illustrates an example switching arrangement for high order channel measurements in accordance with certain embodiments of the present disclosure;

FIG. 5 illustrates an example frame structure used for 8x8 channel measurements in accordance with certain embodiments of the present disclosure;

FIGS. 6A and 6B illustrate example antenna array port numbering for 8-element and 16-element antenna arrays, respectively;

FIG. 7 illustrates an example 8-element antenna array orientation on a laptop;

FIG. 8 illustrates an example 16-element antenna array orientation on a laptop;

FIGS. 9A-9C illustrate front, side and back view, respectively of an example 8-element antenna array where the slots are directly punched on the cover of a laptop with dielectric layer behind the slots.

FIGS. 10A and 10B illustrate example 8-element and 16-element antenna arrays on a tablet computer;

FIGS. 11A and 11B illustrate example antenna array orientations on a mobile phone and smart phone, respectively;

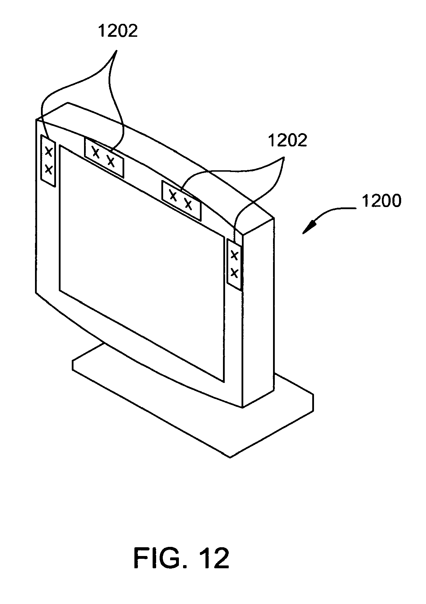

FIG. 12 illustrates an example antenna array orientation on a high definition (HD) television set.

DETAILED DESCRIPTION

The word "exemplary" is used herein to mean "serving as an example, instance, or illustration." Any embodiment described herein as "exemplary" is not necessarily to be construed as preferred or advantageous over other embodiments.
One of the major goals in the Institute of Electrical and Electronics Engineers Wireless Local Area Network (IEEE WLAN) systems is to increase the data bandwidth to about ten times relative to the data bandwidth of the IEEE 802.11n systems, for example, targeting data rates over 1 Gbps for support of various multimedia applications. The requirement for such a high data rate communications necessitates expansion into more complex wireless systems operating with the carrier frequency in higher bands, for example, with the carrier frequency around 60 GHz. However, this approach may substantially decrease the coverage area.
Another approach to increase bandwidth is to use MIMO techniques, expanding the spatial domain of the transmitter and the receiver by utilizing a large number of transmit and receive antennas, such as eight or sixteen-element antenna arrays on both sides. In order to efficiently explore high order MIMO communication systems, the design of antenna arrays becomes an increasingly important part of the system design. It is typically desirable to limit the form factor of the device. Therefore, it becomes a design challenge to fit a relatively large number of antennas into a relatively small area without sacrificing a channel capacity. In addition, it is desirable to for convenience of cable distribution to/from antenna array to keep the antennas in close proximity to processing logic. Because of a small area of the final product, high isolation among the array elements is typically desirable, which may decrease the spatial correlation and increase the channel capacity. When designing higher order antenna arrays, several other parameters may also be considered, such as: the leakage, return loss, radiation pattern, efficiency, directivity, mechanical design, etc.

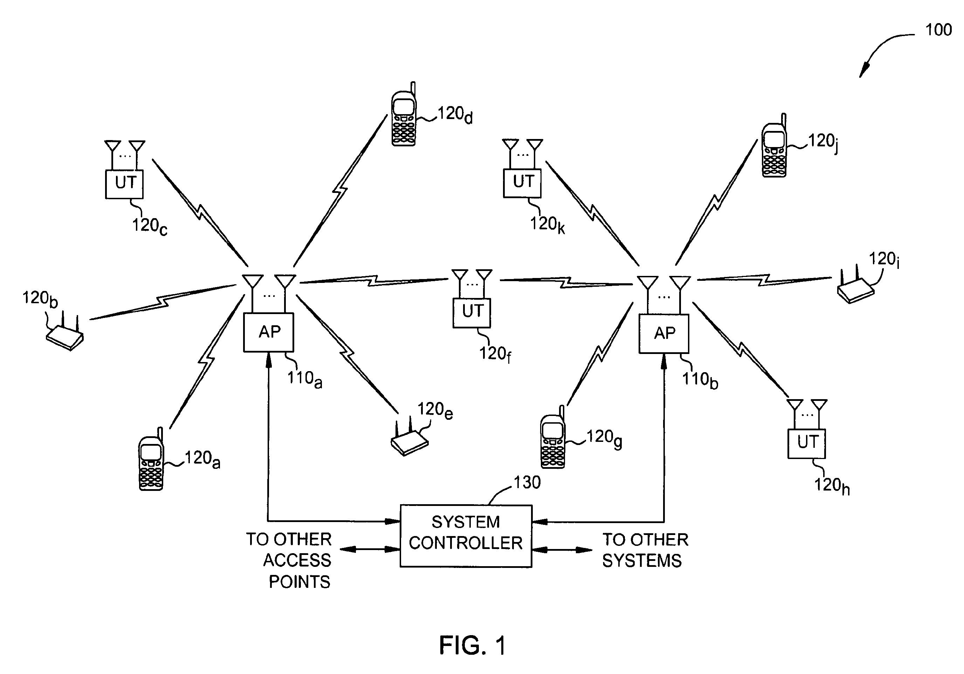

FIG. 1 shows a general MIMO wireless system 100 with access points (APs) and user terminals (UTs). For simplicity, only one access point 110 is shown in FIG. 1. As used herein, the term access point generally refers to a fixed station that communicates with the user terminals and may also be referred to as a base station, node B or some other terminology. A system controller 130 couples to and provides coordination and control for the access points. A user terminal may be fixed or mobile and may also be referred to as a mobile station, a wireless device, or some other terminology. A user terminal may communicate with an access point, in which case the roles of access point and user terminal are established. A user terminal may also communicate peer-to-peer with another user terminal.
MIMO system 100 may be a time division duplex (TDD) system or a frequency division duplex (FDD) system. For a TDD system, the downlink and uplink share the same frequency band. For an FDD system, the downlink and uplink use different frequency bands. The downlink is the communication link from the access points to the user terminals, and the uplink is the communication link from the user terminals to the access points. MIMO system 100 may also utilize a single carrier or multiple carriers for data transmission.
In order to increase capacity and data throughput, an access point and user terminals may be equipped with higher order antenna arrays, such as eight or sixteen antennas with different polarization directions. For certain embodiments of the present disclosure, the user terminal may be a portable computer (laptop), a cellular phone, or a high definition (HD) television set. For certain embodiments, channel measurements may be performed with the Antenna Measurement Platform (AMP) 4x4 MIMO channel sounder developed, for example, at Qualcomm, Inc. and enhanced to enable 8x8 and 16x16 antenna configurations and channel measurements.
Presented measurement results show that it is possible to achieve a median transmit information beamforming capacity greater than 45 b/s/Hz and 80 b/s/Hz by utilizing 8x8 and 16x16 antenna arrays, respectively, with 80 MHz channel bandwidth. In accordance with certain embodiments of the present disclosure, this particular MIMO channel capacity corresponds to average achievable physical layer (PHY) data rates of approximately 1.8 Gbps and 3.2 Gbps for 8x8 and 16x16 antenna arrays, respectively.

Certain channel measurements presented in this disclosure were achieved in the 5 GHz band using a Time Division Duplex (TDD) radio. Measurement data was collected for different indoor locations at various Signal-to-Noise Ratios (SNRs). As described herein, the collected data may be processed in many different ways in order to analyze various aspects of 8x8 and 16x 16 MIMO channels that may be beneficial for designing a communication system with high order antenna arrays.

Exemplary Antenna Design

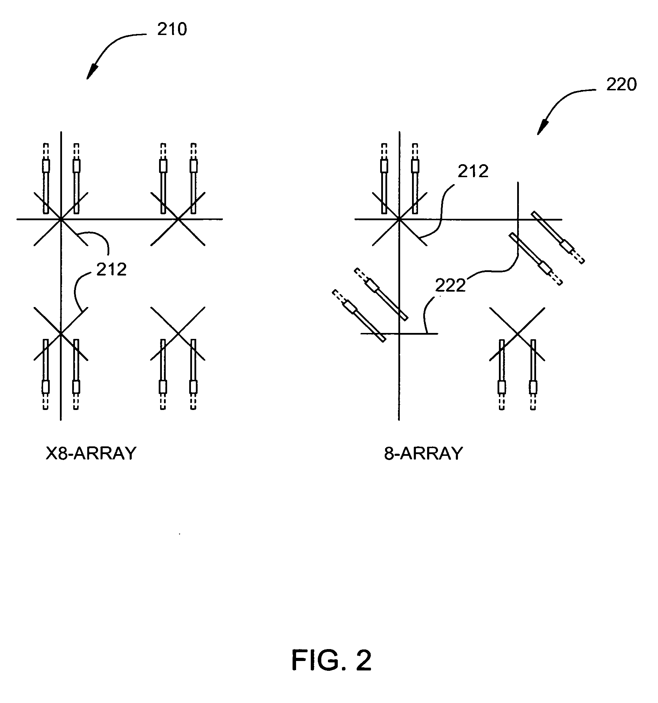

FIG. 2 illustrates two example designs of 8-element dual polarized slot radiated antenna arrays. Both antenna array configurations may be tuned at 5.18 GHz carrier frequency. Cross slots may be formed in a ground plane of the antenna arrays. Co-located antenna element pairs may be formed with a pair of leads extending beyond a corresponding one of the cross slots, with each lead for transferring signal energy to or from a slot of the corresponding cross slot.

In the configuration 210 all crosses 212 (with the same rotational orientation) are used as the polarization directions, while in the configuration 220 the mixed polarization directions are utilized (with half of the crosses 222 rotated by approximately 45 degrees relative to the other half of the crosses 212). The antenna array configuration 210 may be referred to herein as the "x8-array" configuration or the fixed polarization configuration, and the antenna array configuration 220 may be named as "8-array" configuration or the mixed polarization configuration.

The 8-array antenna configuration 220 has a higher polarization diversity due to the use of different cross slots 212 and 222 which, in certain conditions, may result in greater achievable system capacity. For both antenna array configurations, the co-located (neighboring) element pairs may be separated from each other by one half of the transmitting wavelength in the x and y-directions. As an example of the type of form factor that may be achievable, in one example the x8-array board size may be approximately 2.875 inches (or approximately 7.302 centimeters) in the x-direction, and approximately 2.3125 inches (or approximately 5.874 centimeters) in the y-direction, while the 8-array board size may be approximately 3.75 inches (or approximately 9.525 centimeters) in the x-direction, and approximately 2.3125 inches (or approximately 5.874 centimeters) in the y-direction.

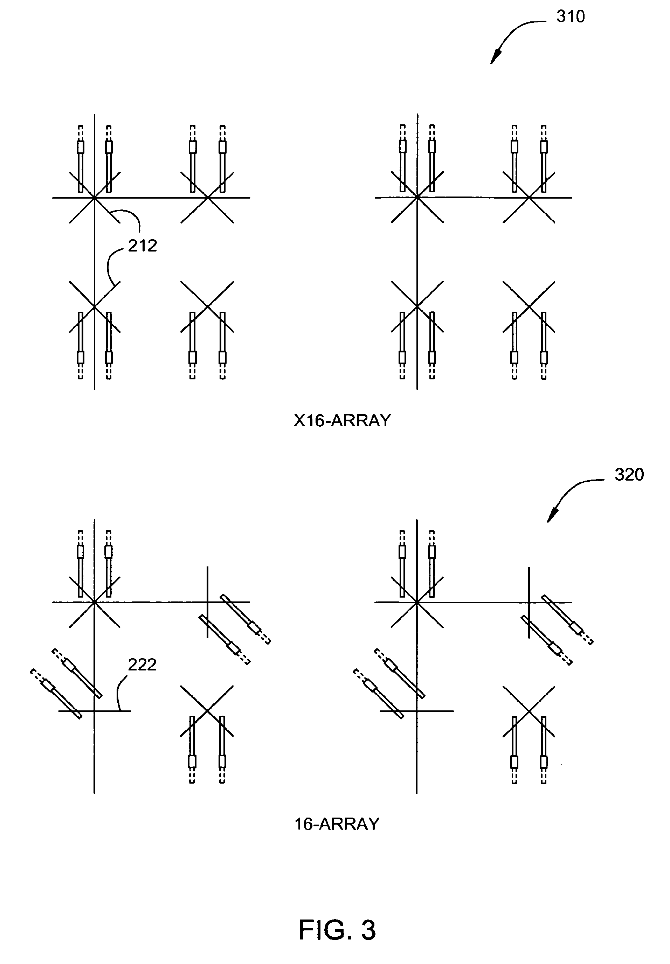

The design concepts of the 8-element antenna arrays may be extended to achieve, two 16-element dual polarized slot radiated antenna array configurations, as illustrated in FIG. 3. These antenna configurations may also be tuned at 5.18 GHz carrier frequency. In the configuration 310, all crosses 212 are again used as the polarization directions, while in the configuration 320, crosses 212 and crosses 222 for mixed polarization directions are utilized. The antenna array configuration 310 may be named as x16-array configuration or the fixed polarization configuration, and the antenna array configuration 320 may be named as 16-array configuration or the mixed polarization configuration.

For certain embodiments of the present disclosure, the antenna slots are printed on 32 mils thick ROGERS-4003 material with the electrical permeability of 3.55. The 8-element arrays may be designed with a small ground plane on the excitation element side of the Printed Circuit Board (PCB) connected with via contacts to the primary ground plane where the antenna slots are located in.

For certain embodiments, the outer shielding of semi-rigid coaxial cable may be soldered to a small ground plane patch and have an edge mounted SubMiniature version A (SMA) connector located at the edge of the antenna board. In an effort to avoid the short coaxial cable from being mismatched and/or resonating (whereby the antenna slot may not be excited) additional board material may be removed so that the edge mount connectors could be mounted to the antenna board without any semi-rigid cable. The center conductors of the SMA adapters may be soldered directly to the excitation element of the antenna. The ground of the SMA adapters may be soldered to the ground of the antenna array, close to the antenna excitation element.

Exemplary Measurement Setup and Methodology

The MIMO antenna configurations presented herein may be used in a wide variety of applications and in a wide variety of devices. In order to demonstrate the performance of the antenna configurations and the achievable performance, a measurement "campaign" was performed. While he detailed configuration(s) presented herein correspond to example measurements taken, those skilled in the art will recognize that many other suitable measurement methodologies may be used to measure antenna performance.

In one embodiment of the present disclosure the channel measurements for high order antenna configurations may be performed with the Antenna Measurement Platform (AMP) channel sounder. The AMP is a 4x4 MIMO channel sounding platform that employs a 2-D mobility platform. The AMP may be used to collect statistical data samples of the MIMO channel over approximately seven wavelengths of the transmission signal at 5.17 GHz carrier frequency. In one embodiment, the mobility platform of the channel sounder is connected with a Recommended Standard 232 (RS-232) cable to the fixed location channel sounding chassis, which is comprised of four transceiver RF chassis, an Field Programmable Gate Array (FPGA) board, and a C-code laptop. The AMP and associated channel sounding chassis is hereafter referred to as the Antenna Measurement Unit (AMU).

In one embodiment the mobile channel sounder chassis, which may be comprised of the same RF chassis and the FPGA board but slightly different C-code and without the mobility platform, is hereafter referred to as the Mobile Unit (MU). This channel sounder chassis may be moved to different indoor locations during channel measurement, to simulate movement of an actual mobile device and provide measurements in a wide variety of locations. The AMU and MU communicate over-the-air (OTA) during each channel measurement to control the mobility platform, and initiate the channel sounding.

Initiation of the channel sounder and control of the AMU may be performed from the MU terminal via the OTA TDD link. For example, TDD OFDM packets may be transmitted periodically between the AMU and MU. The TDD packets utilized for the presented channel measurements may be 1 msec of duration consisting of 222 symbols, each symbol containing 64 tones with 312.5 kHz subcarrier spacing. The center frequency of 5.17 GHz may be selected for measurements because this particular frequency conforms to the resonance frequency of the designed slot antennas.

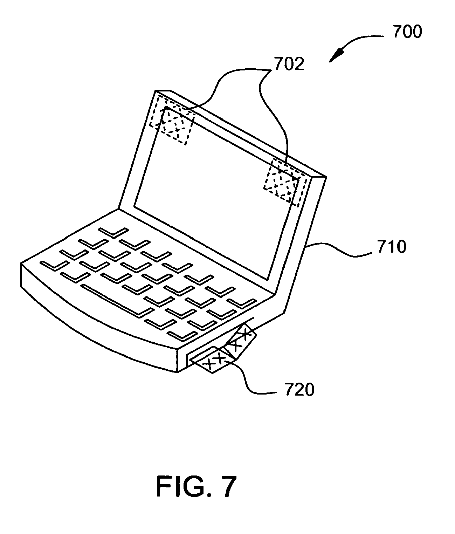

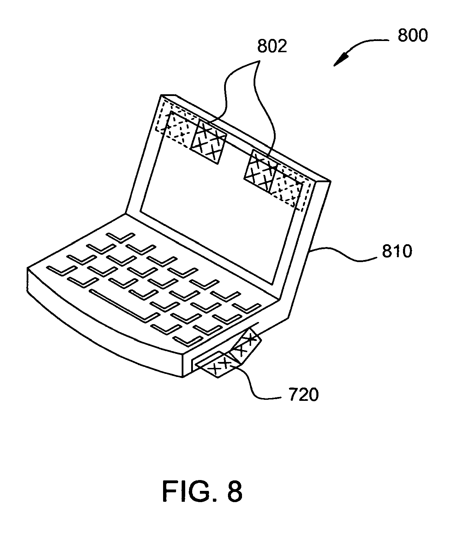

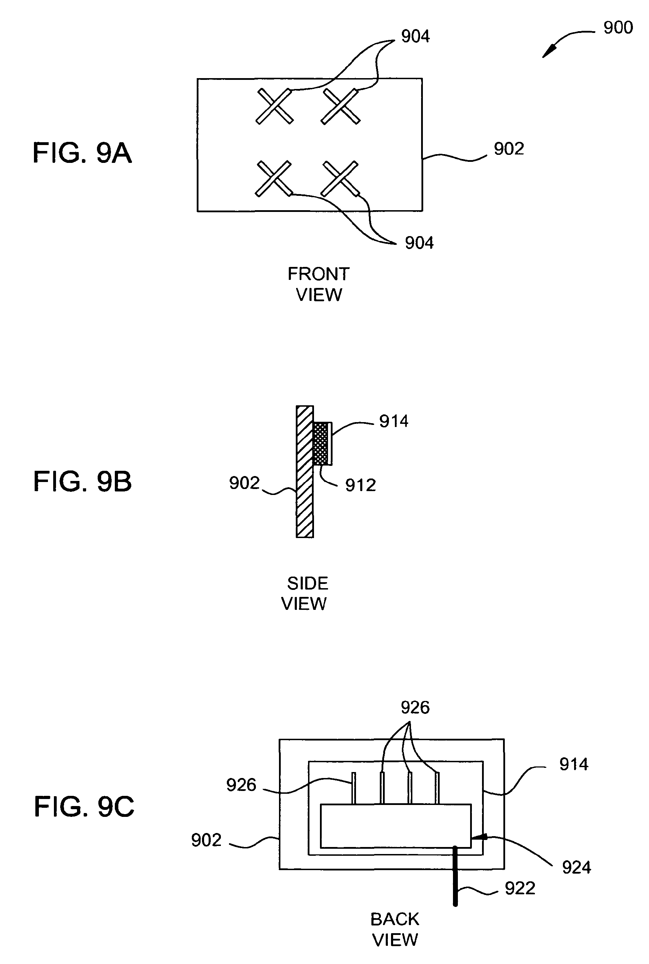

The antenna arrays on both transmitter and receiver sides may be located in the free-space (i.e. not mounted on a mock-up laptop) so that the channel capacity without laptop interference may be measured. The antenna array may be also mounted on the transmitting and receiving devices. For example, the antenna arrays may be located on top of the movable platform for the AMU side of the link and on top of the RF chassis for the MU side of the link. As shown in FIG. 7 and FIG. 8, the 8-element and 16-element antenna arrays may be located at the laptop corners as an integral part of the MU site. As shown in FIGS. 9A-9C, the high order antenna arrays may be also located on the cover of a laptop at the MU site with dielectric layer behind the slots for better isolation.

In order to obtain accurate channel measurements, the AMU and MU terminals may be synchronized. In one example setup, the MU synchronizes with the AMU at the beginning of each measurement (i.e. at each location) and a phase-locked loop (PLL) keeps the two ends of the link locked. Although the timing between the MU and AMU may be locked, the sampling time from frame to frame may vary less than a sample period as the channel changes at a slow pace. The variation in sampling time of the frames may cause a phase slope difference between channel estimates derived from the adjacent frames.

During a processing of the channel measurements, a very small phase slope difference from frame to frame may be observed and corrected with respect to the first frame at each measurement location. It may be observed from the impulse response that the timing does not drift. Locking the over-the-air terminals may have the advantage of enabling more mobility of the MU terminal during the measurements as there is no requirement for a reference signal cable.

In one embodiment of the present disclosure the utilized channel sounder chassis may be capable of measuring a 4x4 MIMO channel. In order to measure 8x8 or 16x16 MIMO channels using a 4x4 channel sounder, receiver switch boxes may be used to enable higher order MIMO channel measurements to be interpolated from multiple 4x4 channel measurements, for example, utilizing the following channel:

$$H_{8x8} = \begin{bmatrix} H_{4x4}^{A} & H_{4x4}^{B} \\ H_{4x4}^{C} & H_{4x4}^{D} \end{bmatrix},$$

$$H_{16x16} = \begin{bmatrix} H_{4x4}^{A} & H_{4x4}^{B} & H_{4x4}^{C} & H_{4x4}^{D} \\ H_{4x4}^{E} & H_{4x4}^{F} & H_{4x4}^{G} & H_{4x4}^{H} \\ H_{4x4}^{I} & H_{4x4}^{J} & H_{4x4}^{K} & H_{4x4}^{L} \\ H_{4x4}^{M} & H_{4x4}^{N} & H_{4x4}^{O} & H_{4x4}^{P} \end{bmatrix},$$

In these equations, $H_{4x4}^{A-D}$ are 4x4 channel matrices derived from four adjacent 4x4 channel measurements performed at different closely spaced times, and $H_{4x4}^{A-P}$ are 4x4 channel matrices derived from sixteen adjacent 4x4 channel measurements performed at different closely spaced times.

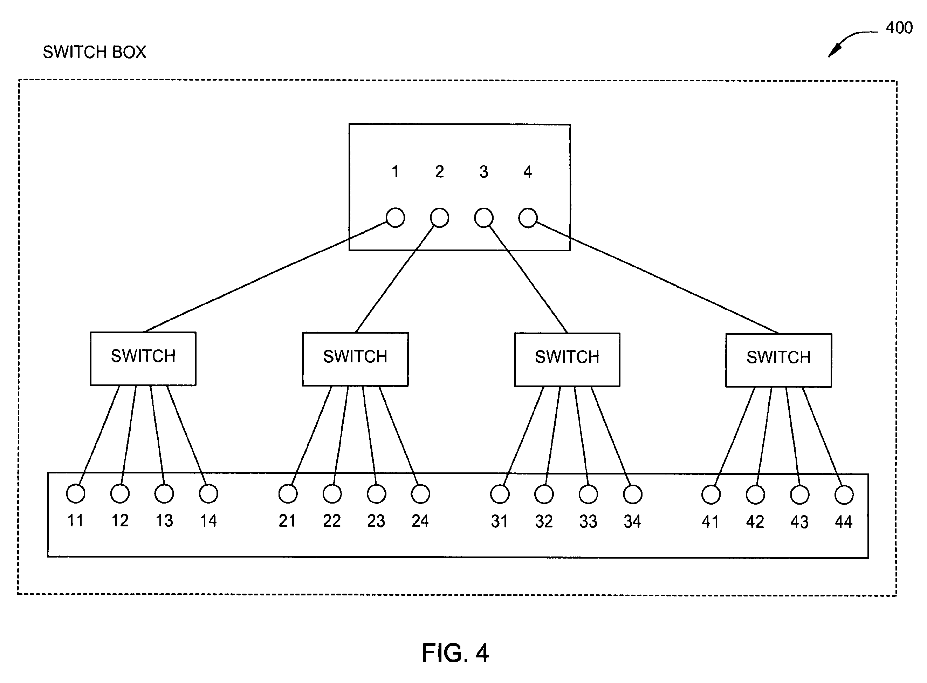

FIG. 4 illustrates an example 4-to-16 radio-frequency (RF) switch box. The RF switch box may be designed to perform the higher order MIMO channel measurements, and may be used as an interface between the 4x4 channel sounder and 8-element and 16-element antenna array. The switch box may be made of any suitable components, such as four 1-to-4 Chelton Control Systems SI-14-03028 switches, specified for 3.8 dB loss, 70 dB isolation and 100 nsec switch speed.

The channel measurement campaign may be performed by moving the MU terminal to various indoor office locations while the AMU terminal may be fixed at a single location. For example, at each measurement location 500 samples of the channel may be captured over approximately 20 second time duration. In one embodiment of the present disclosure the mobile platform (AMP) may be moving during the capture time at the speed of approximately 2 cm/sec (or approximately 0.7874 inch/second) in the x and y directions.

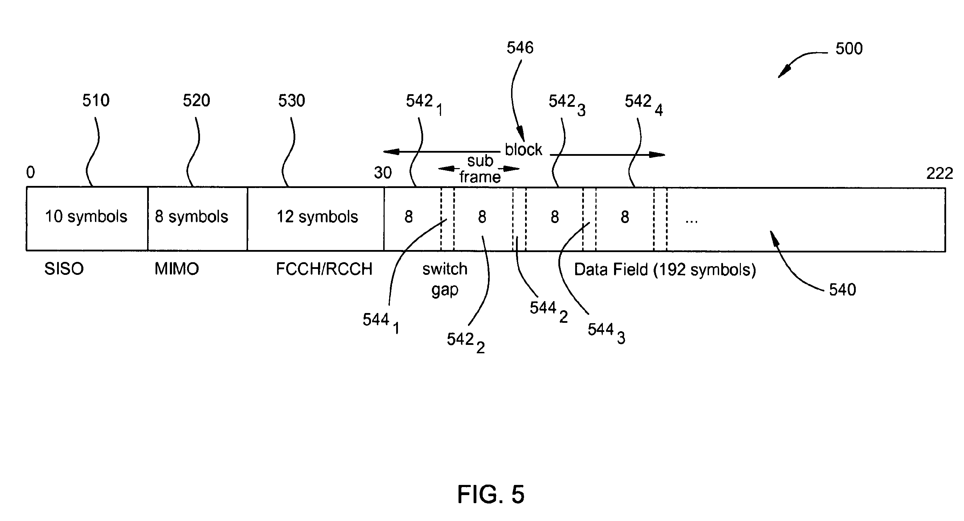

A TDD frame of 1 msec duration may be utilized for the channel measurements, for example, as illustrated in FIG. 5 for the case of 8x8 antenna configuration. For example, each TDD frame 500 may consist of 222 OFDM symbols. The SISO preamble 510 consists of 10 symbols, the MIMO preamble 520 consists of 8 symbols, the FCCH/RCCH control channels 530 are composed of 12 symbols, and remaining 192 symbols represent the data field 540. Within the data field of 192 OFDM symbols, each symbol contains 48 data subcarriers (information tones) spaced 312.5 kHz apart.

The data field 540 may be partitioned into 8-symbol sub-frames illustrated in FIG. 5 with $542_1$, $542_2$, $542_3$, $542_4$, etc. Every sub-frame is followed by one symbol gap illustrated in FIG. 5 with $544_1$, $544_2$, $544_3$, etc in order to allow enough time for the switching of the RF switch-board shown in FIG. 4. Each sub-frame constitutes a single 4x4 channel estimate. Four sub-frames $542_1$, $542_2$, $542_3$, $542_4$ may form one block as illustrated in FIG. 5 with block 546. A single block yields an 8x8 channel estimate. For these particular example measurements, there are five 8x8 channel estimates (blocks). Only a minimal channel variation across a single 1 msec TDD frame may be observed during the measurement campaign. A similar TDD frame structure may be also used for the 16x16 channel measurements.

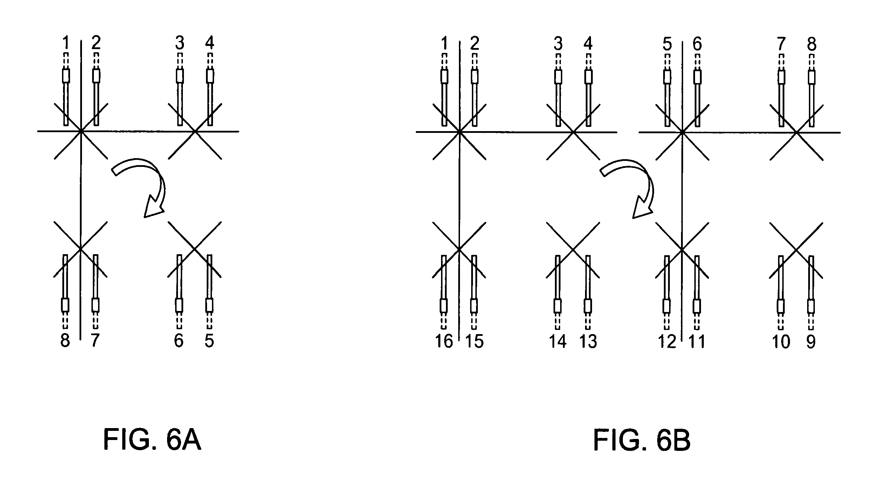

Four and sixteen 4x4 channel estimates within a block may be respectively mapped to a single 8x8 and 16x16 channel estimates as depicted in Eq. 1 and Eq. 2 for 8x8 and 16x16 channel measurements. FIG. 6A shows an example of relative port numbering used for the 8-element antenna array. By assuming that the transmitter and the receiver port connections are identical on the AMU and the MU sides of the transmission link, the channel sub-matrices $H_{4x4}^{1-4}$ of the full channel matrix $H_{8x8}$ are given as:

$$H_{4x4}^1 = \begin{bmatrix} h_{11} & h_{13} & h_{15} & h_{17} \\ h_{31} & h_{33} & h_{35} & h_{37} \\ h_{51} & h_{53} & h_{55} & h_{57} \\ h_{71} & h_{73} & h_{75} & h_{77} \end{bmatrix}, \quad H_{4x4}^2 = \begin{bmatrix} h_{21} & h_{23} & h_{25} & h_{27} \\ h_{41} & h_{43} & h_{45} & h_{47} \\ h_{61} & h_{63} & h_{65} & h_{67} \\ h_{81} & h_{83} & h_{85} & h_{87} \end{bmatrix},$$

$$H_{4x4}^3 = \begin{bmatrix} h_{12} & h_{14} & h_{16} & h_{18} \\ h_{32} & h_{34} & h_{36} & h_{38} \\ h_{52} & h_{54} & h_{56} & h_{58} \\ h_{72} & h_{74} & h_{76} & h_{78} \end{bmatrix}, \quad H_{4x4}^4 = \begin{bmatrix} h_{22} & h_{24} & h_{26} & h_{28} \\ h_{42} & h_{44} & h_{46} & h_{48} \\ h_{62} & h_{64} & h_{66} & h_{68} \\ h_{82} & h_{84} & h_{86} & h_{88} \end{bmatrix},$$

where $H_{4x4}^{1-4}$ are the 4x4 channel estimates of the 1st through 4th sub-frame within a block and $h_{mn}$ are the complex channel coefficients of the 8x8 channel estimate between m-th receiver port and n-th transmitter port. An example of the relative port numbering for the 16-element antenna array is shown in FIG. 6B. Similar channel sub-matrices as for the 8x8 antenna configuration may be constructed for the 16-element antenna arrays.

Exemplary Data Processing

The MIMO channel estimates may be processed in different ways to determine the spatial correlation, eigenvalues, channel capacity, achievable capacity, achievable PHY data rate, and impulse response. Particular processing operations presented herein are examples only of types of processing operations that may be performed to measure antenna performance.

The 4x4 channel sounder utilized in measurements uses a space-time Hadamard matrix for coding of the transmitted signal. In this way all sixteen channel estimates may be simultaneously obtained at the receiver while yielding an additional error-rate performance gain. In generating the channel estimates, a scale factor of 1/2 may be applied on the final channel estimate due to the frequency domain I/Q addition.

The channel estimation may be performed by summing up the Hadamard coded symbols and two adjacent channel estimates (in time, within a single sub-frame). The Hadamard and channel estimate summation has as a consequence that the channel estimates may be eight times larger in the voltage domain, and that the noise power may increase by eight times. Therefore, the total gain in SNR from channel estimation may be 9 dB, assuming a very small or no change in the channel for the time duration of 32 μsec.

The resulting gain from the Hadamard and the channel estimate summation results in the increase of the noise power by a factor of eight. During the noise measurement phase of the measurement campaign, the receiver noise floors that come from each radio front-end and from the external interference may be measured by shutting off the transmitter of the other end. The transmitter shut-off flag may be signaled to the other end over the air interface. After the transmitter has shut off, the noise samples may be multiplied with a diagonal weight matrix for each collected tone. The difference in the noise floor due to the different noise figures and gain of the four receiver chains may be observed. Additionally, any significant interference in the received frequency spectrum is not noticed during this measurement campaign.

The average noise power used to find the measured SNRs may be derived from the noise measurements, for example, by averaging the noise power over all receiver antennas, all 48 information tones, all 192 symbols (per frame) and five noise measurement frames in order to obtain a single average noise power value per location. The resulting average noise power represents the receiver noise floor. However, this average noise power may be calculated from the raw noise measurements without taking into account the increase in the noise power resulting from the Hadamard and the channel estimate summation. To compensate for this, the resulting average noise power may be scaled up eight times for this particular example in order to reflect an increase in the noise power that results from calculating the channel estimates.

The complex spatial correlation may be calculated per tone across the frames (time samples) for each measurement location. For receiver correlation, the samples for each reference transmitter port may be appended to generate a larger sample pool. This same procedure may be repeated for a transmitter correlation with the reference receiver ports. The squared magnitude of the complex correlation may be averaged across the tones and locations to generate 8x8 and 16x16 receiver and transmitter correlation matrices:

$$\left|\rho_{ab}\right|^2_{dB} = 10\log_{10}\left(\frac{1}{N_{locs}N_{tones}}\sum_{j=1}^{N_{locs}}\sum_{i=1}^{N_{tones}}\left|\rho_{ab}(i,j)\right|^2\right),$$

where $\rho_{ab}(ij)$ is the complex spatial correlation coefficient between the array elements $a$ and $b$ for the $i$th tone and $j$th location, $N_{tones}$ is the total number of information tones, $N_{locs}$ is the total number of measurement locations, and $\left|\rho_{ab}\right|^2_{dB}$ is the averaged magnitude squared correlation in dB between array elements $a$ and $b$.

The resulting correlation matrices may be representative of the correlation in the indoor office environments while using the 8-element or 16-element antenna slot arrays. The square root of these correlation matrices may be utilized to correlate simulated 8x8 and 16x16 independent and identically distributed (IID) channel samples in order to compute the correlated IID beamforming capacity as a function of SNR.

The eigenvalues of the factor $HH^H$ may be computed per sample, per tone, and per block, where $H$ is an 8x8 or a 16x16 channel matrix and $H^H$ is the conjugate-transpose (Hermitian) version of the channel matrix $H$. The resulting eight or sixteen eigenvalues may be sorted from the largest to smallest and scaled in order to normalize the eigenvalue power. The scaling may be given by:

$$\hat{\lambda}_i = N\frac{\lambda_i}{\sum_{i=1}^{N}\lambda_i},$$

where $\lambda i$ are the eigenvalues of HHH, $\hat{\lambda}_i$ are the scaled eigenvalues, and N is the normalized power (also number of transmit antennas). The scaled eigenvalues $\hat{\lambda}_i$ may be subsequently scaled up by the average linear SNR (with respect to the measured receiver noise floor) over the 8x8 and 16x16 MIMO channels, or scaled up by a fixed reference SNR for the capacity calculation.

The transmit information beamforming channel capacity may be calculated using the scaled eigenvalues multiplied by the linear SNRs (with respect to the measured receiver noise floor), which may be averaged over all of the 64 channels in each 8x8 MIMO channel sample, or over all of the 256 channels in each 16x16 MIMO channel sample:

$$C_{BF} = \sum_{i=1}^{N_{modes}} \log_2\left(1 + \hat{\lambda}_i SNR_{avg}\right)$$

where $SNR_{avg}$ is the average linear SNR with respect to the receiver noise floor over the current sample of the 8x8 or 16x16 MIMO channel, $N_{modes}$ is the number of used eigenmodes, and $\hat{\lambda}_i$ are previously defined scaled eigenvalues of the current channel sample.

The previous capacity calculation may yield the transmit information beamforming channel capacity. Additionally, the direct mapped MMSE channel capacity may be calculated as:

$$C_{MMSE} = \sum_{i=1}^{N_{modes}} \log_2\left(1 + \hat{\lambda}_i SNR_{i,MMSE}\right),$$

where $SNR_{i,\ MMSE}$ are the linear MMSE SNRs computed as:

$$\overrightarrow{SNR}_{MMSE} = \left(diag\left(\left(H^H H + \sigma^2 I\right)^{-1}\right)\sigma^2\right)^{-1},$$

where $\overrightarrow{SNR_{MMSE}}$ is the vector of $N$ linear MMSE SNRs with respect to the measured receiver noise floor, **H** is the current $NxN$ MIMO channel sample, $\sigma^2$ is the measured receiver noise floor power, and *diag()* denotes the diagonal matrix elements.

The channel capacity may be calculated individually for each measurement location, frame, and block, but also for all locations grouped together and using a specified fixed SNR, which may effectively remove the path loss and yields the capacity with only the channel variation. For the former calculation, the capacities per tone for each sample may be averaged to get a single capacity value per sample, which may be then used to find the capacity cumulative density function (CDF). The latter calculation may be performed for different fixed SNR values allowing the capacity versus SNR curve to be examined.

An estimate of the achievable transmit information beamforming capacity may be calculated using a simple SNR-to-rate mapping (in bits/symbol/tone) as shown in Table 1. The modulation and coding for each SNR-to-rate mapping may also be provided for a reference. The estimated achievable transmit information beamforming capacity of 8x8 and 16x16 MIMO channels may be computed by summing up the attainable rates on each individual eigenmode and normalizing by the symbol duration and subcarrier spacing, which is required because the rates in Table 1 are defined for an OFDM system with 20 MHz bandwidth and 64 subcarriers.

**Table 1**

| SNR Range [dB] | Code Rate | Modulation | Bits/Symbol/Tone |
|---|---|---|---|
| >=26.5 | 7/8 | 256-QAM | 7.0 |
| >=24.0 AND <26.5 | ¾ | 256-QAM | 6.0 |
| >=20.0 AND <24.5 | 5/6 | 64-QAM | 5.0 |
| >=18.5 AND <20.0 | ¾ | 64-QAM | 4.5 |
| >=17.0 AND <18.5 | 2/3 | 64-QAM | 4.0 |
| >=16.0 AND <17.0 | 7/8 | 16-QAM | 3.5 |
| >=12.5 AND <16.0 | ¾ | 16-QAM | 3.0 |
| >=11.25 AND <12.5 | 5/8 | 16-QAM | 2.5 |
| >=9.5 AND <11.25 | ½ | 16-QAM | 2.0 |
| >=6.0 AND <9.5 | ¾ | QPSK | 1.5 |
| >=3.25 AND <6.0 | ½ | QPSK | 1.0 |
| >=3.0 AND <3.25 | ¾ | BPSK | 0.75 |
| >=0.25 AND <3.0 | ½ | BPSK | 0.5 |
| >=-100.00 AND <0.25 | - | - | 0.0 |

The estimate of the achievable capacity may be utilized to find the estimated achievable PHY rate of 8x8 and 16x16 MIMO-OFDM systems operating in some specified channel bandwidth. For example, the achievable PHY rates for a 40 MHz and 80 MHz bandwidth with 8-element antenna arrays may be computed by using 108 data tones from the specifications of the IEEE 802.11n standard, and by using 236 data tones from the proposed Very High Throughput (VHT) standard specifications, respectively.

The achievable PHY rate and the associated contribution of the lesser eigenmodes are examined in order to determine the number of usable eigenmodes in an 8x8 and 16x16 MIMO channels. This may be performed by calculating the achievable PHY rate on just the lesser modes and taking the ratio with the overall PHY rate supported by the channel when all eight or sixteen modes are utilized. Incrementally greater number of lesser eigenmodes may be utilized to calculate the contribution from these particular eigenmodes. The PHY rate efficiency when excluding the least significant eigenmode(s) may be found as 1-$x$, where $x$ is the lesser eigenmode(s) contribution.

The impulse response may be calculated for all channel samples at all measurement locations, or a subset of channel samples. For each channel estimate, the 52 data and pilot tones (excluding the guard tones) may be utilized for the computation of the impulse response. Each pilot tone may be replaced with the average of the two adjacent data tones to find the interpolated channel estimate at that particular tone. The 52 point inverse fast Fourier transform (IFFT) of the 52 tone channel estimate may be applied, which prevents shaping of the power delay profile (PDP) that would result from incorporating the zeroed out guard tones. The calculated impulse responses may be also used to determine whether any timing drift occurs in the system.

Exemplary Measurement Results

The collected data from the channel measurements may be processed in different ways to examine various aspects of 8x8 and 16x16 antenna array configurations. The transmitter and receiver spatial correlation may be calculated from 8x8 and 16x16 channel estimate samples. The eigenmode SNR CDFs may be computed per measurement location, or scaled eigenvalue CDFs may be determined across all measurement locations. An 8x8 or a 16x16 channel capacity may be explored and compared to the IID capacity and correlated IID capacity by using the measured transmitter and receiver correlation magnitudes.

An average receiver and transmitter spatial correlation squared magnitude (across the tones and measurement locations) versus the relative port number may be calculated. An example of the relative port numbering is illustrated on FIG. 6A and FIG. 6B for 8-element and 16-element antenna arrays, respectively. The correlation with relative slot 2 denotes the correlation to the co-located (neighboring or 90° polarized) antenna slot. It may be observed that the smallest correlation is for the antenna slots that are the furthest apart.

The eigenvalues of the 8x8 channel estimates may be calculated for every frame and tone at each location. Subsequently, the eigenmode SNR (with respect to the receiver noise floor) CDFs at each location and the CDFs of the scaled eigenvalues across all the locations may be calculated. The former relates directly to the channel capacity incorporating the imperfections of the measurement setup (non-flat frequency response) and path-loss variations, while the latter may show only the channel variation across all the measurement locations. The scaling of the eigenvalues may be performed as given by Eq. 4, where the sum of the scaled eigenvalues is equal to N (normalized transmit power), which in this particular case is 8 or 16. Once the scaling is applied, the power of the channel is not affected anymore. The scaled eigenvalue power in time (frame index) for all eigenmodes and a single tone at one measurement location may be calculated. It may be observed that the primary mode is very stable whereas the least significant mode has a large relative variation.

The CDFs of all scaled eigenvalues may be computed over all the measurement locations when taken together as a single sample pool. This may produce the distribution of the eigenvalues free from the channel path-loss, variation in the path-loss, and the transmitter/receiver frequency response due to the channel sounder transceiver filters.

The eigenmode SNR distributions for the "best" and "worst" case measurement locations may be computed. For these CDFs, the average channel SNR using the measured receiver noise floor for each tone may be calculated, and the scaled eigenvalues per tone may be multiplied by the average SNR value. After that, the per tone eigenmode SNRs for all information tones and usable frames for the given measurement location may be grouped into a single sample pool from which the eigenmode histograms may be determined. Consequently, the resulting CDFs show the distribution of the eigenmode SNRs incorporating the frequency response of the measurement setup.

The transmit information beamforming channel capacity, direct mapped MMSE channel capacity, the achievable transmit information beamforming PHY rate for the "best" and "worst" case locations, and a comparison of the beamforming and MMSE median PHY rates across the locations may be computed from the collected measurement data.

The 8x8 or 16x16 MIMO transmit information beamforming channel capacity CDFs may be computed as a function of the eigenmode SNR. The capacity may be calculated per tone and per sample as previously explained, and then averaged across the tones to get a single capacity value per sample. It should be noted that the capacity calculation given by Eq. 5 yields transmit information beamforming channel capacity. Consequently, the capacities include variation in the path-loss that occurred during the measurement. An estimate of the achievable transmit information beamforming capacity may be determined by utilizing a simple SNR-to-rate mapping (in bits/symbol/tone) as previously presented.

The CDF of the achievable capacity represents what might be expected in terms of real attainable capacities in measured 8x8 or 16x16 MIMO channel samples.

The channel and achievable transmit information beamforming capacity CDFs may be computed for the "best" and "worst" case measurement locations for both forward and reverse transmission links. For example, the mean of the achievable information beamforming channel capacity considering all measurement locations in the case of x8-array and x16 arrays are approximately 44.4 b/s/Hz and 80.2 b/s/Hz, respectively. The mean of the achievable information beamforming channel capacity in the case of 8-array polarized antennas at the transmitter and receiver may be higher, as measured at approximately 45.3 b/s/Hz.

The direct mapped MMSE channel capacity may be also calculated. The MMSE SNRs used to find the MMSE channel capacity may be computed by using the measured receiver noise floor for the best and worst case measurement location. It may be observed that there is a smaller variation in the direct mapped MMSE channel capacity relative to the transmit information beamforming channel capacity. The mean of achievable information channel capacity of the MMSE receiver considering all measurement locations in the case of x8-array and x16-array configurations are approximately 32.3 b/s/Hz and 64 b/s/Hz, respectively. The mean of the achievable information channel capacity of the MMSE receiver in the case of 8-array polarized antennas at the transmitter and receiver is slightly higher than for x8-array, and it is approximately 32.7 b/s/Hz.

The median transmit information beamforming and direct mapped MMSE capacities for each measurement location may be compared. These capacities per measurement location are computed as a function of the sorted average SNR. It may be observed that at low SNR, the MMSE channel capacity may be higher than the beamforming capacity, while the opposite may be true for high SNR values.

The transmit information beamforming capacity, for a fixed SNR value, may be examined taking all the scaled eigenvalues from all measurement locations. In this way the measured beamforming capacity may be computed as a function of the SNR and compared with 8x8 or 16x16 IID and correlated IID beamforming channel capacities (using the measured spatial correlation magnitude).

The achievable capacity represents an estimate of the transmit information beamforming channel capacity that might be obtained given a specified modulation and coding scheme. The mean of the achievable information channel capacities considering all measurement locations in the case of x8-array and x16-array configurations are approximately 24.2 b/s/Hz and 43.3 b/s/Hz, respectively. The mean of the achievable information channel capacity in the case of 8-array antenna polarization is higher, and it is approximately 24.7 b/s/Hz.

From these particular measurements, it may be observed that the measured beamforming capacity is below the simulated 8x8 IID capacity curve by approximately 7 b/s/Hz at the SNR of about 25 dB. The simulated correlated IID channel beamforming capacity curve using the measured spatial correlation magnitude may be very close to the measured capacity curve. A comparison of the measured 8x8 or 16x16 transmit information beamforming capacity and simulated 8x8 or 16x16 transmit information beamforming capacity using TGn Channel Models B, C, D, and E may be conducted. It may be observed that the Channel Model E most closely matches the measured channel in terms of capacity.

From the results of the conducted measurement campaign, it may be observed that the PHY rate of approximately 816 Mbps and 836 Mbps on average may be attained using an 8x8 MIMO communication system operating in 40 MHz bandwidth with x8-array and 8-array antenna configurations presented herein, respectively. An average PHY rate of approximately 1.78 Gbps and 1.82 Mbps may be attained using an 8x8 MIMO communication system operating in 80 MHz bandwidth with x8-array and 8-array configurations, respectively. The median estimate of achievable PHY rate may be computed as a function of the sorted average SNR.

From the 16x16 channel measurement campaign, a substantially higher (e.g., almost double) PHY data rate may be observed. For example, the PHY data rate of approximately 1.46 Gbps on average may be attained using a 16x16 MIMO communication system operating in 40 MHz bandwidth with x16-array antenna configurations, and the average PHY rate of approximately 3.2 Gbps could be attained using a 16x16 MIMO communication system with x16-array configurations operating in 80 MHz channel bandwidth.

In evaluating the transmit information beamforming capacity and achievable transmit information beamforming PHY rate of a MIMO channel, it may be beneficial to find the number of usable eigenmodes. This may be performed by calculating the ratio of the achievable PHY rate on the lesser eigenmode(s) to the overall achievable PHY rate when all 8 or 16 eigenmodes are utilized in the 8x8 or the 16x16 antenna configurations, respectively. The PHY rate efficiency may be determined from the eigenmode contribution and an average value may be calculated as a function of the sorted average SNR.

It may be observed that the two least significant eigenmodes may contribute only approximately 5 % to the overall achievable PHY rate in the case of 8x8 antenna configuration with x8-array polarized antennas, even in cases where the average SNR is high. In the case of 16x16 antenna configurations with x16-array antennas, 90% of the estimated PHY rate efficiency may be obtained by using only thirteen most significant eigenmodes.

The contribution of the least significant eigenmodes versus the sorted average SNR may be calculated. The CDF of the PHY rate efficiency for the best-case measurement location may also be computed. For example, a 10-20 % spread in the efficiency may be observed for the case of 8x8 antenna configuration. The varying number of active eigenmodes does not appear to have a significant impact on the variance of the efficiency distribution.

The impulse response of the channel estimates may be calculated to observe the power delay profile (PDP) and to determine if any timing drift is present. The normalized PDP magnitude of every single channel in time (frame index) may be determined for any measurement location.

The measured transmit information beamforming channel capacity along with an average measured SNR (with respect to the measured receiver noise floor) and an average received signal strength (RSS) per port may be computed for different measurement locations in indoor office environments. The average received signal strength (RSS) and average SNR may be calculated at each measurement location. The mean RSS of about -63.83 dBm, -62.19 dBm and -65.15 dBm are computed for the x8-array, 8-array and x16-array, respectively. The median SNR may be, for example, equal to approximately 26.44 dB, 25.85 dB, and 23.54 dB for x8-array, 8-array and x16-array antenna configurations, respectively.

All previously presented measurement results were obtained for the case when the 8-element antenna arrays are located in the free space, with the 16-element antenna arrays mounted at the corners of a laptop (as illustrated in FIG. 8). In the case when the antenna arrays are mounted on the laptop, the average achievable capacity and PHY data throughput may slightly decrease due to the antenna efficiency loss. For example, when the x8-array is mounted at the corner of a laptop at the MU site, an averaged PHY data throughput for 80 MHz bandwidth may decrease by approximately 12 % for presented measurements. The peak and the averaged PHY data throughputs across the measurement locations for the 80 MHz bandwidth are approximately 2.4 Gbps and 1.57 Gbps, respectively.

When the 8-array slot is mounted at the corner of a laptop, an average PHY data throughput for 80 MHz channel bandwidth may decrease only by approximately 4 % for presented measurements. The peak and the averaged PHY data throughput across the measurement locations for the 80 MHz bandwidth are approximately 2.27 Gbps and 1.75 Gbps, respectively.

The mean of the achievable information beamforming channel capacity considering all measurement locations in the case when x8-array and 8-array antenna configurations are mounted on the laptop are approximately 39.61 b/s/Hz and 43.25 b/s/Hz, respectively. The mean of achievable information channel capacity of the MMSE receiver considering all measurement locations in the case when x8-array and 8-array antenna configurations are mounted on the laptop are approximately 31.19 b/s/Hz and 32.39 b/s/Hz, respectively. The mean of the achievable information channel capacity considering all measurement locations in the case when x8-array and 8-array antenna configurations are mounted on the laptop are approximately 21.39 b/s/Hz and 23.74 b/s/Hz, respectively.

From the measurement campaign when the antenna arrays are mounted on a laptop, mean RSSs of approximately -62.19 dBm and -61.17 dBm are computed for the x8-array and 8-array designs, respectively. The corresponding median SNR is approximately 23.84 dB and 23.99 dB for the x8-array and 8-array, respectively. It may be observed that these values are somewhat lower than in the case when the antenna arrays are in the free space.

It may be observed from the exemplary measurement campaign that the array slot with mixed polarization has higher achievable channel capacity and data throughput than the antenna array slot with fixed polarization. Furthermore, if the antenna arrays are mounted on the laptop, the achievable channel capacity and the data throughput in the case of antenna array with mixed polarization may not decrease as much as the channel capacity and the data throughput for the antenna array with fixed polarization. This may be attributable to a higher polarization diversity gain offered by the antenna array with mixed polarization directions.

Exemplary Antenna Array Orientations

Different orientations of the antenna arrays may be utilized for different types of popular wireless devices and applications. For the following description, it may be assumed that higher order antenna arrays, such as the antenna arrays with eight and sixteen elements with fixed and mixed polarizations presented herein, are utilized. However, those skilled in the art will appreciate that different higher order antenna arrays may also be used.

FIG. 7 illustrates a laptop computer 700 with one or more 8-element antenna arrays 702 integrated into the chassis 710. In addition, or as an alternative, an antenna array 704 may also be integrated into a Personal Computer Memory Card International Association (PCMCIA) card 720. The example antenna array orientation on the laptop computer 700 shows a pair of fixed 8-element arrays 702, while the 8-element antenna array configuration on the PCMCIA card 720 illustrates fixed and foldable antennas that allows for storage, as well as the manual adjustments of the antenna orientation.

FIG. 8 illustrates a laptop computer 800 with one or more 16-element antenna arrays 802 integrated into a chassis 810, and on a PCMCIA card 720. The example illustrates a pair of fixed 16-element arrays 802.

FIG. 9A illustrates the front view of an example 8-element antenna array with slots 904 directly punched on the cover of a laptop 902. As illustrated in FIG. 9B the dielectric layer 912 can be placed behind the slots. In this way the antenna feeds 914 and RF circuits 924 are isolated from the laptop cover 902. FIG. 9C illustrates the back view of an 8-element antenna array configuration. The transmission lines 926 are directly connected to the RF circuits 924. Cables 922 provide the interface between RF circuits and the baseband processor.

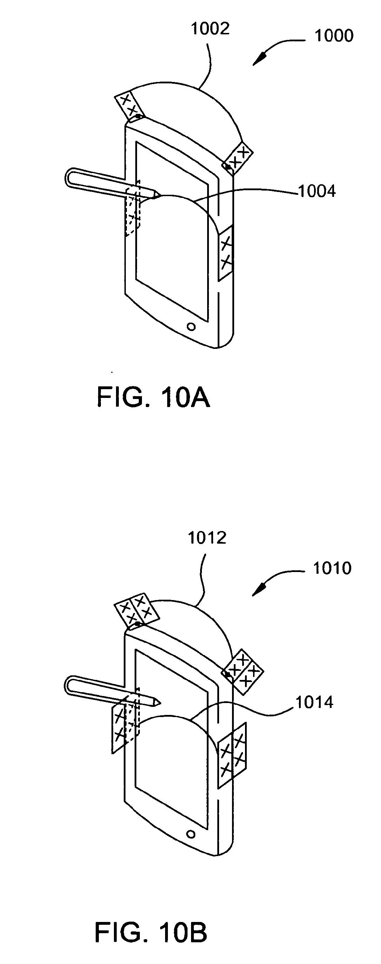

FIG. 10A illustrates example configurations of 8-element antenna arrays on a tablet computer 1000. As illustrated, the arrays may take the form of a pair of both movable "rabbit ear" arrays 1002 and/or fixed arrays 1004. As illustrated in FIG. 10B, a tablet computer 1010 may also incorporate 16-element antenna arrays as fixed arrays 914 and/or "rabbit ear" antennas 1012. An orientation of the slot antenna arrays in a tablet computer may need to be flat, possibly on the backside of the device, depending on the thickness of the unit.

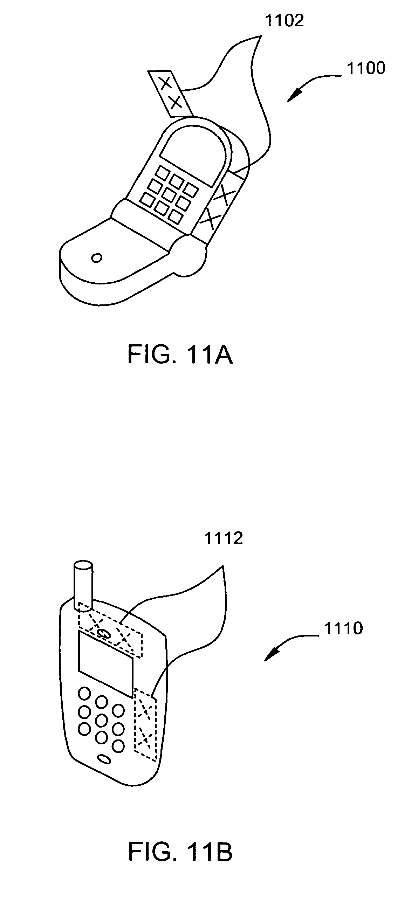

Fitting of high order antenna arrays into mobile and portable handhold devices, such as cellular phones and smart phones may be a challenging task because of their size. However, the techniques presented herein may allow for compact arrays that may be incorporated into such devices to increase data throughput for applications running on such devices. FIGs. 11A and 11B illustrate alternative antenna arrays 1102 and 1112 that may be used for a cellular phone 1100 and a smart phone 1110, respectively. The "rabbit ear" antenna array 1102 illustrated on the cellular phone may be flipped up when better reception is necessary, for example, or when the higher data rates are desired.

Very high data rate wireless communication systems may be utilized for the transmission of high definition (HD) video signals. By exploiting the size of HD devices, such as widescreen HD television sets, one or more high order antenna arrays (e.g., with eight or sixteen elements) may be incorporated into such devices and spaced out accordingly in order to improve the spatial diversity and decrease the correlation between antenna pairs. For example, multiple arrays 1202 may be incorporated into an HD television set, which may allow for significant increases in data throughput.

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the present disclosure may be embodied directly in hardware, in a software module executed by a processor, or in a combination of the two. A software module may reside in any form of storage medium that is known in the art. Some examples of storage media that may be used include random access memory (RAM), read only memory (ROM), flash memory, EPROM memory, EEPROM memory, registers, a hard disk, a removable disk, a CD-ROM and so forth. A software module may comprise a single instruction, or many instructions, and may be distributed over several different code segments, among different programs, and across multiple storage media. A storage medium may be coupled to a processor such that the processor can read information from, and write information to, the storage medium. In the alternative, the storage medium may be integral to the processor.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware or any combination thereof. If implemented in software, the functions may be stored as one or more instructions on a computer-readable medium. A storage media may be any available media that may be accessed by a computer. By way of example, and not limitation, such computer-readable media can comprise RAM, ROM, EEPROM, CD-ROM or other optical disk storage, magnetic disk storage or other magnetic storage devices, or any other medium that may be used to carry or store desired program code in the form of instructions or data structures and that may be accessed by a computer. Disk and disc, as used herein, include compact disc (CD), laser disc, optical disc, digital versatile disc (DVD), floppy disk, and Blu-ray® disc where disks usually reproduce data magnetically, while discs reproduce data optically with lasers.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of transmission medium.

Further, it should be appreciated that modules and/or other appropriate means for performing the methods and techniques described herein may be downloaded and/or otherwise obtained by a user terminal and/or base station as applicable. For example, such a device may be coupled to a server to facilitate the transfer of means for performing the methods described herein. Alternatively, various methods described herein may be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device may be utilized.

It is to be understood that the claims are not limited to the precise configuration and components illustrated above. Various modifications, changes and variations may be made in the arrangement, operation and details of the methods and apparatus described above without departing from the scope of the claims.

**Claims**

1. A high order antenna array (220) for use in a user device in multiple input multiple output, MIMO communications, **characterised by**:

   a ground plane having two perpendicular axes forming four quadrants, the ground plane further comprising at least four cross slots (212,222) formed therein, each cross slot (212,222) of the four cross slots being positioned within one quadrant of the four quadrants such that the at least four cross slots are positioned symmetrically about the two perpendicular axes of the ground plane; and
   at least four neighbouring antenna element pairs wherein the antenna pairs are dual polarized, and each pair is formed with a pair of leads extending beyond a corresponding one of the cross slots, each lead for transferring signal energy to or from a slot of the corresponding cross slot; and wherein a rotational orientation of at least two of the four cross slots (212) is substantially different than a rotational orientation of at least two other of the at least four cross slots (222).

2. The antenna array (220) of claim 1, wherein the rotational orientation of at least two (212) of the four cross slots differs from the rotational orientation of at least two other (222) of the at least four cross slots by approximately 45 degrees.

3. The antenna array (220) of claim 1, wherein:

   the ground plane has at least eight cross slots (212, 222) formed therein; and
   the antenna array comprises at least eight neighbouring antenna element pairs.

4. The antenna array (220) of claim 3, wherein a rotational orientation of at least four of the eight cross slots is substantially different than a rotational orientation of at least four other of the at least eight cross slots.

5. The antenna array (220) of claim 4, wherein the rotational orientation of at least four of the eight cross slots differs from the rotational orientation of at least four other of the at least eight cross slots by approximately 45 degrees.

6. The antenna array (220) of any previous claim, wherein:

   the antenna array is tuned for a carrier frequency having a corresponding wavelength $\lambda$; and
   antenna elements of co-located antenna pairs are separated by $\lambda/2$ from each other along the perpendicular axes.

7. A wireless communications device (700,800,902,1000,1010), comprising an antenna array (220) according to any of Claims 1 to 6 and further comprising logic for transmitting and receiving multiple input multiple output MIMO signals via the antenna array.

8. The device of claim 7, wherein the rotational orientation of at least two of the four cross slots differs from the rotational orientation of at least two other of the at least four cross slots by approximately 45 degrees.

9. The device of claim 7, wherein:

   the ground plane of the antenna array has at least eight cross slots formed therein; and
   the antenna array comprises at least eight neighbouring antenna element pairs.

10. The device of any of claims 7 to 9, wherein:

    the antenna array is tuned for a carrier frequency having a corresponding wavelength $\lambda$; and
    antenna elements of co-located antenna pairs are separated by $\lambda/2$ from each other along the perpendicular axes.

**11.** The device of any of Claims 7 to 10, wherein the device comprises a laptop computer (700,800, 902,), a phone or a high definition, HD television.

**12.** The device of any of claims 7 to 10, wherein the antenna array is integrated into a chassis of a laptop computer (800) or the antenna array is integrated on the cover of the laptop (902) with dielectric layer behind the antenna slots.

**Patentansprüche**

**1.** Antennenarray (220) hoher Ordnung für die Verwendung in einer Benutzervorrichtung in Mehrfacheingangs-Mehrfachausgangs-, MIMO-, Kommunikationen, **gekennzeichnet durch**:

eine Grundebene mit zwei senkrechten Achsen, die vier Quadranten bilden, wobei die Grundebene ferner wenigstens vier Kreuzschlitze (212, 222) darin ausgebildet hat, wobei jeder Kreuzschlitz (212, 222) der vier Kreuzschlitze innerhalb eines Quadranten der vier Quadranten positioniert ist, so dass die wenigstens vier Kreuzschlitze symmetrisch um die zwei senkrechten Achsen der Grundebene positioniert sind; und wenigstens vier benachbarte Antennenelementpaare, wobei die Antennenpaare doppelt polarisiert sind und jedes Paar mit einem Paar Leitungen ausgebildet ist, das sich über einen entsprechenden der Kreuzschlitze hinaus erstreckt, wobei jede Leitung zur Überführung von Signalenergie an einen oder von einem Schlitz des entsprechenden Kreuzschlitzes dient; und wobei eine Drehorientierung von wenigstens zwei der vier Kreuzschlitze (212) im Wesentlichen verschieden zu einer Drehorientierung von wenigstens zwei anderen der wenigstens vier Kreuzschlitze (222) sind.

**2.** Antennenarray (220) nach Anspruch 1, wobei die Drehorientierung der wenigstens zwei (212) der vier Kreuzschlitze sich von der Drehorientierung wenigstens zwei anderer (222) der wenigstens vier Kreuzschlitze um etwa 45 Grad unterscheidet.

**3.** Antennenarray (220) nach Anspruch 1, wobei:

die Grundebene wenigstens acht Kreuzschlitze (212, 222) darin ausgebildet hat; und
das Antennenarray wenigstens acht benachbarte Antennenelementpaare aufweist.

**4.** Antennenarray (220) nach Anspruch 3, wobei die Drehorientierung von wenigstens vier der acht Kreuzschlitze im Wesentlichen verschieden zu einer Drehorientierung von wenigstens vier anderen der wenigstens acht Kreuzschlitze ist.

**5.** Antennenarray (220) nach Anspruch 4, wobei die Drehorientierung von wenigstens vier der acht Kreuzschlitze sich von der Drehorientierung von wenigstens vier anderen der wenigstens acht Kreuzschlitze um etwa 45 Grad unterscheidet.

**6.** Antennenarray (220) nach jedem vorhergehenden Anspruch, wobei:

das Antennenarray auf eine Trägerfrequenz mit einer entsprechenden Wellenlänge λ abgestimmt ist; und
Antennenelemente von Antennenpaaren mit gleicher Position entlang der senkrechten Achsen um λ/2 voneinander getrennt sind.

**7.** Drahtlose Kommunikationsvorrichtung (700, 800, 902, 1000, 1010), die ein Antennenarray (220) nach einem der Ansprüche 1 bis 6 aufweist und ferner eine Logik zum Senden und Empfangen von Mehrfacheingangs-Mehrfachausgangs-, MIMO, Signalen über das Antennenarray aufweist.

**8.** Vorrichtung nach Anspruch 7, wobei die Drehorientierung von wenigstens zwei der vier Kreuzschlitze sich von der Drehorientierung von wenigsten zwei anderen der wenigstens vier Kreuzschlitze um etwa 45 Grad unterscheidet.

**9.** Vorrichtung nach Anspruch 7, wobei:

die Grundebene des Antennenarray wenigstens acht Kreuzschlitze darin ausgebildet hat; und
das Antennenarray wenigstens acht benachbarte Antennenelementpaare aufweist.

**10.** Vorrichtung nach einem der Ansprüche 7 bis 9, wobei:

das Antennenarray auf eine Trägerfrequenz mit einer entsprechenden Wellenlänge λ abgestimmt ist; und Antennenelemente von Antennenpaaren mit gleicher Position entlang der senkrechten Achsen um λ/2 voneinander getrennt sind.

**11.** Vorrichtung nach einem der Ansprüche 7 bis 10, wobei die Vorrichtung einen Laptoprechner (700, 800, 902), ein Telefon oder einen High-Definition-, HD-, Fernseher aufweist.

**12.** Vorrichtung nach einem der Ansprüche 7 bis 10, wobei das Antennenarray in ein Gehäuse eines Laptoprechners (800) integriert ist oder das Antennenarray auf dem Deckel des Laptop (902) mit einer dielektrischen Schicht hinter den Antennenschlitzen integriert ist.

**Revendications**

**1.** Réseau d'antennes d'ordre élevé (220) pour utilisation dans un dispositif d'utilisateur dans des communications à entrées multiples et sorties multiples, MIMO, **caractérisé par** :

un plan de masse ayant deux axes perpendiculaires formant quatre cadrans, le plan de masse comprenant en outre au moins quatre fentes croisées (212, 222) formées dedans, chaque fente croisée (212, 222) des quatre fentes croisées étant disposée dans un des quatre cadrans de telle sorte que lesdites au moins quatre fentes croisées sont disposées de façon symétrique par rapport aux deux axes perpendiculaires du plan de masse ; et au moins quatre paires d'éléments d'antennes voisines, les paires d'antennes étant à double polarisation, et chaque paire étant constituée d'une paire de conducteurs s'étendant au-delà de l'une correspondante des fentes croisées, chaque conducteur étant destiné à transférer de l'énergie de signal vers ou à partir d'une fente de la fente croisée correspondante ; et dans lequel l'orientation en rotation d'au moins deux des quatre fentes croisées (212) est sensiblement différente de l'orientation en rotation d'au moins deux autres desdites au moins quatre fentes croisées (222).

**2.** Réseau d'antennes (220) selon la revendication 1, dans lequel l'orientation en rotation d'au moins deux (212) des quatre fentes croisées diffère de l'orientation en rotation d'au moins deux autres (222) desdites au moins quatre fentes croisées d'environ 45 degrés.

**3.** Réseau d'antennes (220) selon la revendication 1, dans lequel :

le plan de masse comporte au moins huit fentes croisées (212, 222) formées dedans ; et le réseau d'antennes comprend au moins huit paires d'éléments d'antennes voisines.

**4.** Réseau d'antennes (220) selon la revendication 3, dans lequel l'orientation en rotation d'au moins quatre des huit fentes croisées est sensiblement différente de l'orientation en rotation d'au moins quatre autres desdites au moins huit fentes croisées.

**5.** Réseau d'antennes (220) selon la revendication 4, dans lequel l'orientation en rotation d'au moins quatre des huit fentes croisées diffère de l'orientation en rotation d'au moins quatre autres desdites au moins huit fentes croisées d'environ 45 degrés.

**6.** Réseau d'antennes (220) selon l'une quelconque des revendications précédentes, dans lequel :

le réseau d'antennes est accordé pour une fréquence porteuse ayant une longueur d'onde λ correspondante ; et les éléments d'antennes de paires d'antennes colocalisées sont séparés entre eux de λ/2 suivant les axes perpendiculaires.

**7.** Dispositif de communication sans fil (700, 800, 902, 1000, 1010), comprenant un réseau d'antennes (220) selon l'une quelconque des revendications 1 à 6, et comprenant en outre de la logique pour émettre et recevoir des signaux MIMO à entrées multiples et sorties multiples par l'intermédiaire du réseau d'antennes.

**8.** Dispositif selon la revendication 7, dans lequel l'orientation en rotation d'au moins deux des quatre fentes croisées diffère de l'orientation en rotation d'au moins deux autres desdites au moins quatre fentes croisées d'environ 45 degrés.

9. Dispositif selon la revendication 7, dans lequel :

le plan de masse du réseau d'antennes comporte au moins huit fentes croisées formées dedans ; et
le réseau d'antennes comprend au moins huit paires d'éléments d'antennes voisines.

10. Dispositif selon l'une quelconque des revendications 7 à 9, dans lequel :

le réseau d'antennes est accordé pour une fréquence porteuse ayant une longueur d'onde $\lambda$ correspondante ; et
les éléments d'antennes de paires d'antennes colocalisées sont séparés entre eux de $\lambda/2$ suivant les axes perpendiculaires.

11. Dispositif selon l'une quelconque des revendications 7 à 10, dans lequel le dispositif comprend un ordinateur portable (700, 800, 902), un téléphone ou un poste de télévision à haute définition, HD.

12. Dispositif selon l'une quelconque des revendications 7 à 10, dans lequel le réseau d'antennes est intégré dans un châssis d'un ordinateur portable (800) ou le réseau d'antennes est intégré sur le couvercle de l'ordinateur portable (902) avec une couche diélectrique derrière les fentes d'antennes.

FIG. 1

X8-ARRAY                    8-ARRAY

FIG. 2

X16-ARRAY

16-ARRAY

# FIG. 3

SWITCH BOX

FIG. 4

FIG. 5

FIG. 6B

FIG. 6A

FIG. 7

802    800

810

720

FIG. 8

FIG. 9A

900

904

902

904

FRONT
VIEW

FIG. 9B

914

902

912

SIDE
VIEW

FIG. 9C

926

926

914

902

924

922

BACK
VIEW

FIG. 10A

FIG. 10B

FIG. 11A

FIG. 11B

FIG. 12

**EP 2 311 143 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002085643 A1
- US 5489913 A